Europäisches Patentamt

**European Patent Office**

Office européen des brevets

(19)

(11) Veröffentlichungsnummer: **0 124 649**
**B1**

(12) # EUROPÄISCHE PATENTSCHRIFT

(45) Veröffentlichungstag der Patentschrift:
**28.10.87**

(51) Int. Cl.⁴: **F 16 C 29/06**

(21) Anmeldenummer: **83112389.8**

(22) Anmeldetag: **09.12.83**

(54) Lageranordnung zur geradlinigen Führung eines Schlittens längs einer Führungsschiene.

(30) Priorität: **12.04.83 DE 3313128**

(43) Veröffentlichungstag der Anmeldung:
**14.11.84 Patentblatt 84/46**

(45) Bekanntmachung des Hinweises auf die Patenterteilung:
**28.10.87 Patentblatt 87/44**

(84) Benannte Vertragsstaaten:
**AT BE CH FR GB IT LI LU NL SE**

(56) Entgegenhaltungen:
**DE - A - 2 136 024**
**US - A - 4 363 526**

(73) Patentinhaber: **IPIRANGA SA, Carretera gral.**
**Madrid-Irun KM 456, E-Lasarte/Guipuzcoa (ES)**

(72) Erfinder: **Lehmann, Wolfgang, Ing. grad.,**
**Nagoldstrasse 97, D-7000 Stuttgart 50 (DE)**
Erfinder: **Aab, Hans-Walter, Fronackerstrasse 10/1,**
**D-7050 Waiblingen (DE)**

(74) Vertreter: **Rüger, Rudolf, Dr.-Ing. et al,**
**Webergasse 3 Postfach 348, D-7300 Esslingen/Neckar**
**(DE)**

EP 0 124 649 B1

**Beschreibung**

Die Erfindung betrifft eine Lageranordnung zur geradlinigen Führung eines Schlittens längs einer Führungsschiene, mit vier zwischen der Führungsschiene und dem Schlitten angeordneten endlosen Reihe von Kugeln, bei der die Führungsschiene vier den tragenden Kugeln der Kugelreihen zugeordnete parallele Kugellaufbahnen aufweist, die jeweils in dem Übergangsbereich zwischen zwei benachbarten aufeinanderstehenden Schenkeln der im Querschnitt im wesentlichen Doppel-T- oder kreuzförmigen Führungsschiene liegen und bei der im Innern des die Führungsschiene auf wenigstens drei Seiten umgreifenden Schlittens zu beiden Seiten der Führungsschiene Kugellaufbahnen für die tragende Kugeln, sowie Umlenk- und Rückführbahnen für die entlasteten Kugeln angeordnet sind.

Bei einer aus der DE-A 2 136 024 bekannten Lageranordnung dieser Art ist die im Querschnitt im wesentlichen Doppel-T-förmige Führungsschiene mit wesentlich grösseren Höhen- als Breitenabmessungen ausgebildet, um damit eine erhöhte Biegesteifigkeit für in der Hauptbelastungsrichtung auftretende Beanspruchungen zu erzielen. Zur Befestigung der Führungsschiene auf der Auflagefläche, bspw. des Bettes einer Werkzeugmaschine dienen längs der Führungsschiene verteilt angeordnete Auflageböcke, mit denen die Führungsschiene verschraubt ist. Auf diesen Auflageböcken liegt die Führungsschiene entweder schmalseitig auf, oder aber die Auflageböcke sind mit zwei wulstartigen Stützen ausgebildet, zwischen die die Führungsschiene eingebettet ist. Bei der erstgenannten Befestigungsart ist die Kippstabilität für Einsatzzwecke, bei denen hohe Seitenkräfte zu erwarten sind, nicht ausreichend; die zweitgenannte Befestigungsart ist aufwendig und mit einem zusätzlichen Platzbedarf behaftet, der gelegentlich unerwünscht ist.

Aufgabe der Erfindung ist es, eine Lageranordnung zur geführten, drehgesicherten und unbegrenzten Linearbewegung des zur Aufnahme hoher Lasten eingerichteten Schlittens längs der Führungsschiene zu schaffen, die sich durch eine hohe Biegesteifigkeit und eine leichte kippstabile Befestigungsmöglichkeit auf einem Träger bzw. einer Unterlage auszeichnet, sowie an die unterschiedlichen Gegebenheiten verschiedenartiger Anwendungsfälle ohne weiteres angepasst werden kann.

Zur Lösung dieser Aufgabe ist die eingangs genannte Lageranordnung erfindungsgemäss dadurch gekennzeichnet, dass die Führungsschiene auf wenigstens einer Seite zwei angeformte, längsverlaufende, parallele Stege trägt, von denen eine Längsnut begrenzt ist, und dass die Führungsschiene mit ihrer Längsnut auf einen an einem Trägerteil vorstehend vorgesehenen Steg engtoleriert aufgesetzt und mittels der Befestigungseinrichtungen mit dem Trägerteil verbunden ist.

Durch die auf das Profil der Führungsschiene aufgesetzten Stege wird die Biegesteifigkeit der Führungsschiene ohne wesentliche Erhöhung des Materialaufwandes vergrössert. Gleichzeitig ergeben aber die beiden Längsstege bzw. die zwischen ihnen verlaufende Längsnut eine kippstabile Flansch- und Fundamentbefestigung, ohne dass dazu die Führungsschiene seitlich umgreifende Befestigungselemente verwendet oder an der Führungsschiene selbst wesentliche Veränderungen vorgesehen werden müssen.

In einer bevorzugten Ausführungsform weist die Führungsschiene auf der der ersten Längsnut gegenüberliegenden Seite eine von Stegen begrenzte zweite Längsnut auf. Auch ist es zweckmässig, wenn die Befestigungseinrichtungen in dem Boden der zweiten Längsnut vertieft angeordnet sind und in diese Längsnut ein Abdeckstreifen eingefügt ist, so dass die Längsnut nach aussen zu verschlossen ist. Auf diese Weise wird die Ablagerung von Schmutz oder Spänen zwischen den Längsstegen verhindert, was zu einer Beeinträchtigung der ordnungsgemässen Funktion der auf den Kugellaufbahnen laufenden Wälzkörper führen könnte.

Der Abdeckstreifen kann durch Halteteile mit der Führungsschiene formschlüssig verklammert sein und im übrigen aus einem flexiblen Kunststoffmaterial bestehen.

Abhängig von dem jeweiligen Einsatzzweck kann in die zweite Längsnut aber auch bspw. ein Positioniermassstab oder eine Zahnstange eingesetzt sein, wobei der Schlitten angetrieben oder antreibend und in jeder Stellung positionierbar sein kann.

Das zur Befestigung der Führungsschiene dienende Trägerteil kann entweder unmittelbar ein Maschinengestell oder Fundamentteil sein, doch kann die Anordnung auch derart getroffen sein, dass das Trägerteil eine im Querschnitt im wesentlichen T-förmige Profilschiene ist, die zur Befestigung auf einer Auflagefläche eingerichtet ist.

Der Vorteil dieser Befestigungsart liegt darin, dass sie sich durch eine hohe Kippstabilität auszeichnet, wobei die Befestigungsschrauben der Führungsschiene von allen Seitenkäften freigehalten sind. Auch müssen auf seiten des Auflage- oder Trägerteils keine aufwendigen Vorkehrungen getroffen werden, weil der Steg, auf den die Führungsschiene aufgesetzt wird, ein verhältnismässig einfach herstellbares Element ist.

Die Schenkel der Führungsschiene können parallelflankig begrenzt sein, wobei die Führungsschiene selbst mit Vorteil im Querschnitt im wesentlichen quadratisch ist. Damit kann der Schlitten in verschiedener räumlicher Ausrichtung auf der Führungsschiene angeordnet werden, während andererseits sich für in den verschiedenen Richtungen an dem Schlitten angreifende Belastungen eine im wesentlichen gleiche Belastungsfähigkeit in jeder Richtung ergibt. Auch kann bei einer solchen Führungsschiene erforderlichenfalls ohne weiteres ein die Führungsschiene rundum umgreifender geschlossener Schlitten verwendet werden. An der Führungsschiene sind dann die vier Kugellaufbahnen punktsymmetrisch bezüglich der Längsmittelachse der Führungsschiene angeordnet.

Bei einer Reihe von Anwendungsfällen, insbesondere dann, wenn die Lageranordnung zur Abstützung sehr schwerer oder sperriger Maschinenelemente dient, bereitet es Schwierigkeiten, die fertig montierte Lageranordnung zwischen die beiden aneinander zu lagernden Maschinenelemente, bspw. ein Maschinenfundament und ein Support, einzubauen. Es wäre dann erwünscht, wenn Schlitten und die Führungsschiene bei auseinandergenommener Lageranordnung an ihrem jeweiligen Maschinenelement zu befestigen und erst hierauf die Maschinenelemente lagerichtig zueinander zu positionieren und anschliessend daran die Lageranordnung fertig zu montieren. Dies ist bei der neuen Lageranordnung ohne weiteres dann möglich, wenn diese derart ausgebildet ist, dass der im Querschnitt C-förmige Schlitten eine Einführöffnung aufweist, deren lichte Weite grösser ist als die Breite der Führungsschiene, wobei die schlittenseitigen Kugellaufbahnen sowie die Umlenk- und die Rückführbahn für die Kugeln jeweils paarweise in Baueinheiten bildenden Wälzlagereinsätzen zusammengefasst sind, in denen die Kugeln der beiden Kugelreihen unverlierbar gehaltert sind. Diese Wälzlagereinsätze sind dann von der Stirnseite her in entsprechende Ausnehmungen des Schlittens beidseitig der Führungsschiene einschiebbar und dort lagerichtig fixierbar ausgebildet.

In der Zeichnung sind Ausführungsbeispiele des Gegenstandes der Erfindung dargestellt. Es zeigen:

Fig. 1 eine Lageranordnung gemäss der Erfindung, im auseinandergenommenen Zustand, in perspektivischer Darstellung der Einzelteile,

Fig. 2 die Lageranordnung nach Fig. 1, in zusammengesetztem Zustand, teilweise im Querschnitt und in einem anderen Massstab, und

Fig. 3 eine Lageranordnung gemäss der Erfindung, in der Zuordnung zu einem Maschinenfundament.

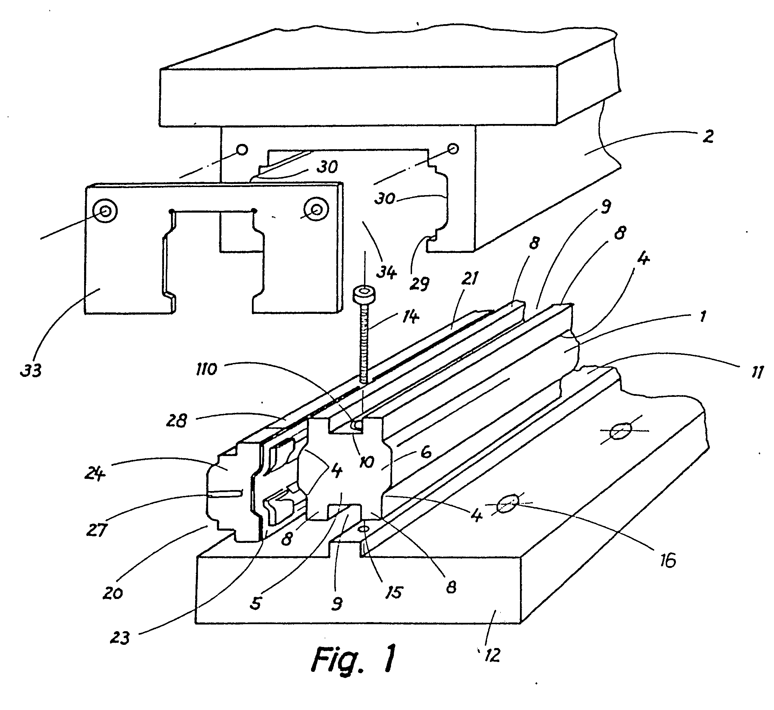

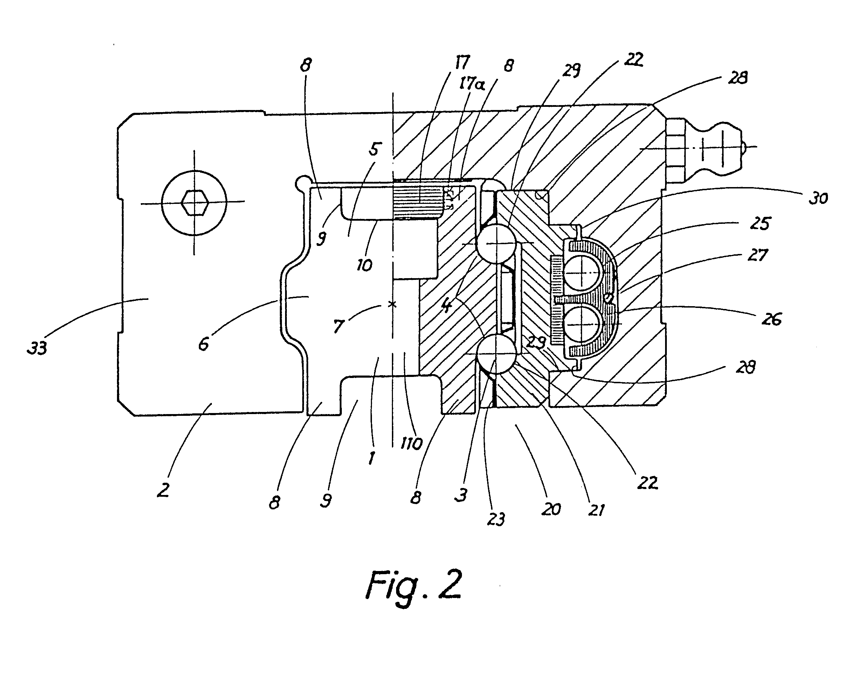

Die Lageranordnung weist eine im Querschnitt im wesentlichen Doppel-T- oder kreuzförmige Führungsschiene 1 und einen auf dieser gradlinig geführten Schlitten 2 von im wesentlichen C-förmiger Querschnittsgestalt auf, der die Führungsschiene 1 auf drei Seiten umfasst. Zwischen der Führungsschiene 1 und dem Schlitten 2 sind vier endlose Reihen von Kugeln 3 angeordnet, deren tragende Kugeln auf vier zugeordneten parallelen Kugellaufbahnen 4 der Führungsschiene 1 laufen. Die in ihrem Profil der Umrissgestalt der Kugel 3 sich anschmiegenden geschliffenen Kugellaufbahnen 4 der Führungsschiene 1 sind jeweils in dem Übergangsbereich zwischen zwei benachbarten aufeinanderstehenden Schenkeln 5, 6 der Führungsschiene 1 vorgesehen, wie dies aus den Fig. 1, 2 zu entnehmen ist. Sie sind punktsymmetrisch bezüglich der bei 7 angedeuteten Längsmittelachse der Führungsschiene 1 angeordnet, d.h. die Mittelpunkte der auf den Kugellaufbahnen 4 laufenden Kugeln 3 liegen in den Ecken eines gedachten Quadrates. Die Führungsschiene 1 selbst ist im Querschnitt im wesentlichen quadratisch, wobei ihre Schenkel 5, 6 parallelflankig begrenzt sind.

Auf der Ober- und der Unterseite ihrer Schenkel 5 trägt die Führungsschiene 1 jeweils zwei parallele Längsstege 8, zwischen denen eine im Querschnitt U-förmige parallelflankig begrenzte Längsnut 9 begrenzt ist.

Im Boden 10 der oberen Längsnut 9 sind vertieft Schraubenlöcher 110 angeordnet, die bis zu der gegenüberliegenden Längsnut 9 durchgehen und die in vorbestimmten Abständen über die Länge der Führungsschiene 1 verteilt sind.

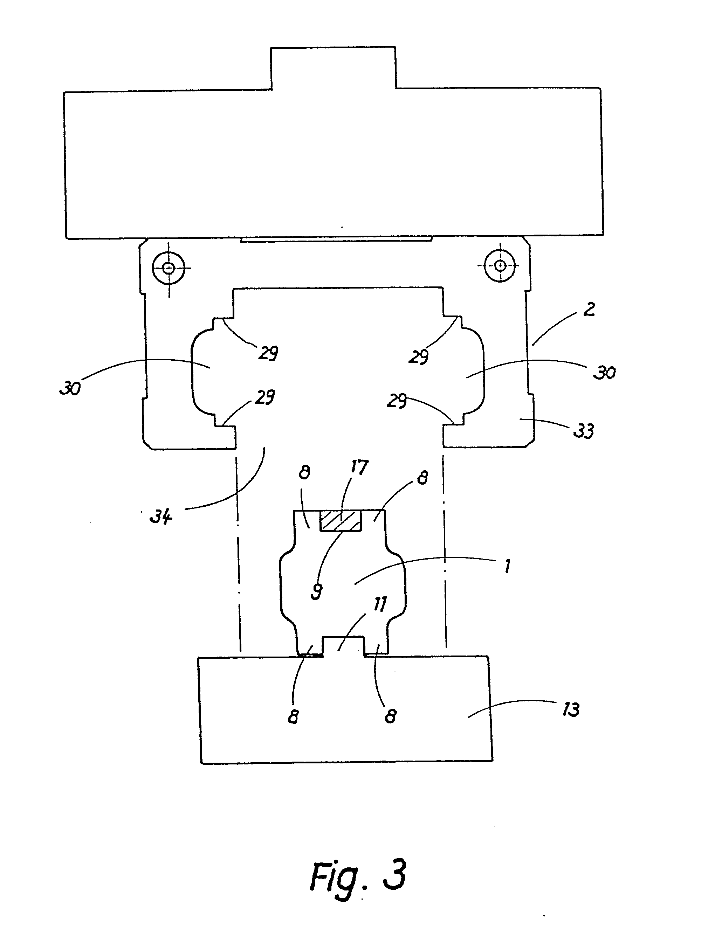

Mit ihrer unteren Längsnut 9 kann die Führungsschiene 1 auf einen Steg 11 einer Profilschiene 12 oder unmittelbar eines Maschinenfundamentes 13 (Fig. 3) engtoleriert aufgesetzt werden. Die Führungsschiene 1 ist mit dem Steg 11 mittels in die Schraubenlöcher 110 eingesetzter Befestigungsschrauben 14 verschraubt, die in entsprechende Gewindebohrungen 15 des Steges 11 der ihrerseits entsprechende Befestigungsbohrungen 16 aufweisenden Profilschienen 12 oder des Maschinenbettes 13 eingreifen. Die Schraubenbolzen 14 sind, wie erwähnt, in dem Boden 10 oder der oberen Längsnut 9 versenkt. Diese Längsnut selbst ist durch einen aus Kunststoffmaterial bestehenden flexiblen Abdeckstreifen 17 verschlossen, so dass das Eindringen von Schmutz oder dergleichen ausgeschlossen ist.

Anstelle des Abdeckstreifens 17 kann in entsprechender Weise auch ein Positioniermassstab oder eine Zahnstange in die Längsnut 9 eingesetzt sein, um nur einige Möglichkeiten von in die Längsnut 9 einfügbaren Elemente zu erwähnen.

Bei der dargestellten Führungsschiene 1 sind zwei Längsnuten 9 vorgesehen, von denen die eine an der Oberseite und die andere an der Unterseite der Führungsschiene 1 vorgesehen ist. Es sind auch Ausführungsformen denkbar, bei denen lediglich eine Führungsnut 9 vorhanden ist, oder bei denen sogar bis zu vier Längsnuten 9 vorgesehen sein können, deren Achsen paarweise aufeinander senkrecht stehen. Auch können die Längsnuten 9, bezogen auf Fig. 2, seitlich vorgesehen sein.

Die vier endlosen Reihen von Kugeln 3 sind jeweils paarweise unverlierbar in zwei Wälzlagereinsätze 20 bildenden Baueinheiten unverlierbar gehaltert. Jede dieser Baueinheiten 20 weist ein aus Stahl bestehendes leisten- oder streifenförmiges Laufbahnelement 21 auf, an dem zwei parallele Kugellaufbahnen 22 ausgebildet sind, die in ihrer Profilgestalt sich an den Umriss der Kugeln 3 anschmiegen. Die auf den Kugellaufbahnen 22 befindlichen, tragenden Kugeln 3 sind durch ein auf das Laufbahnelement 21 aufgesetztes Halteblech 23 unverlierbar gehaltert. An beiden Stirn-

5       0 124 649       6

seiten sind an das Laufbahnelement 21 zwei aus Kunststoffmaterial bestehende Umlenkelemente 24 angeschlossen, in denen für jede Kugelreihe eine U-förmige Umlenkbahn enthalten ist, über die die entlasteten Kugeln 3 in die Rücklaufbahn 25 eines auf der Rückseite des Laufbahnelementes 21 angeordneten, im wesentlichen rinnenförmigen und aus Kunststoffmaterial bestehenden Rückführelementes 26 geleitet werden. Das Ganze ist mittels eines aufgeschnappten Drahtbügels 27 zu der Baueinheit vereinigt.

Die Wälzlagereinsätze 20 weisen an dem Laufbahnelement 21 ausgebildete parallele Führungsflächen 28 auf, denen entsprechende Führungsflächen 29 in der jeweils zugeordneten Ausnehmung 30 des Schlittens 2 zugeordnet sind. Die Wälzlagereinsätze 20 können deshalb von der Stirnseite her in den Schlitten 2 beidseitig der Führungsschiene 1 eingeschoben und lagerichtig mittels auf den Schlitten 2 aufgesetzter Deckel 33 fixiert werden.

Die Einführöffnung 34 des C-förmigen Schlittens 2 ist in ihrer lichten Weite grösser als die Breite der Führungsschiene 1, so dass bei herausgenommenen Wälzlagereinsätzen 20 der Schlitten 2 mit den mit ihm verbundenen Maschinenelementen in der aus Fig. 3 ersichtlichen Weise frei von der Führungsschiene 1 abgenommen oder lagerichtig zu dieser positioniert werden kann. Bei der Montage werden dann anschliessend die Wälzlagereinsätze 20 eingeschoben, womit die Lageranordnung funktionsfähig ist.

Anstelle eines im Querschnitt C-förmigen Schlittens 2 könnte auch ein Schlitten verwendet werden, der geschlossen ist, d.h. die Führungsschiene 1 allseitig umgibt. Ein solcher Schlitten ist dann auch zur Drehmomentübertragung geeignet, wobei die Führungsschiene 1 dann auch als Profilwelle dienen kann.

**Patentansprüche**

1. Lageranordnung zur geradlinigen Führung eines Schlittens (2) längs einer Führungsschiene (1), mit vier zwischen der Führungsschiene und dem Schlitten angeordneten endlosen Reihen von Kugeln (3), bei der die Führungsschiene vier den tragenden Kugeln der Kugelreihen zugeordnete parallele Kugellaufbahnen (4) aufweist, die jeweils in dem Übergangsbereich zwischen zwei benachbarten, aufeinanderstehenden Schenkeln (5, 6) der im wesentlichen Doppel-T- oder kreuzförmigen Führungsschiene liegen, bei der im Innenraum des die Führungsschiene auf wenigstens drei Seiten umgreifenden Schlittens zu beiden Seiten der Führungsschiene Kugellaufbahnen (22) für die tragenden Kugeln, sowie Umlenk- und Rückführbahnen (25) für die entlasteten Kugeln angeordnet sind, dadurch gekennzeichnet, dass die Führungsschiene (1) auf wenigstens einer Seite zwei angeformte, längsverlaufende, parallele Stege (8) trägt, von denen eine Längsnut (9) begrenzt ist, und dass die Führungsschiene (1) mit ihrer Längsnut (9) auf einen an einem Trägerteil (12, 13) vorstehend vorgesehenen Steg (11) engtoleriert aufgesetzt und mittels der Befestigungseinrichtungen (7) mit dem Trägerteil verbunden ist.

2. Lageranordnung nach Anspruch 1, dadurch gekennzeichnet, dass die Führungsschiene (1) auf der der ersten Längsnut (9) gegenüberliegenden Seite eine von Stegen (8) begrenzte zweite Längsnut (9) aufweist.

3. Lageranordnung nach Anspruch 2, dadurch gekennzeichnet, dass die Befestigungseinrichtungen (110) in dem Boden (10) der zweiten Längsnut (9) vertieft angeordnet sind und in die Längsnut (9) ein Abdeckstreifen (17) eingefügt ist.

4. Lageranordnung nach Anspruch 3, dadurch gekennzeichnet, dass der Abdeckstreifen (17) durch Halteteile (17a) mit der Führungsschiene (1) formschlüssig verklammert ist.

5. Lageranordnung nach Anspruch 3 oder 4, dadurch gekennzeichnet, dass der Abdeckstreifen (17) aus einem flexiblen Kunststoffmaterial besteht.

6. Lageranordnung nach einem der Ansprüche 2–4, dadurch gekennzeichnet, dass in die zweite Längsnut (9) ein Positioniermassstab eingesetzt ist.

7. Lageranordnung nach einem der Ansprüche 2 bis 5, dadurch gekennzeichnet, dass in die zweite Längsnut (9) eine Zahnstange eingesetzt ist.

8. Lageranordnung nach Anspruch 1, dadurch gekennzeichnet, dass das Trägerteil eine im Querschnitt im wesentlichen T-förmige Profilschiene (12) ist, die zur Befestigung auf einer Auflagefläche eingerichtet ist.

9. Lageranordnung nach einem der vorhergehenden Ansprüche, dadurch gekennzeichnet, dass die Schenkel (5, 6) der Führungsschiene parallelflankig begrenzt sind.

10. Lageranordnung nach Anspruch 9, dadurch gekennzeichnet, dass die Führungsschiene (1) im Querschnitt im wesentlichen quadratisch ist.

11. Lageranordnung nach einem der vorhergehenden Ansprüche, dadurch gekennzeichnet, dass an der Führungsschiene (1) die vier Kugellaufbahnen (4) punktsymmetrisch bezüglich der Längsmittelachse der Führungsschiene (1) angeordnet sind.

12. Lageranordnung nach einem der vorhergehenden Ansprüche, dadurch gekennzeichnet, dass der im Querschnitt C-förmige Schlitten (2) eine Einführöffnung (34) aufweist, deren lichte Weite grösser ist als die Breite der Führungsschiene (1), dass die schlittenseitigen Kugellaufbahnen (22) sowie die Umlenk- und die Rückführbahn für die Kugeln jeweils paarweise in Baueinheiten bildenden Wälzlagereinsätzen (20) zusammengefasst sind, in denen die Kugeln (3) der beiden Kugelreihen unverlierbar gehaltert sind, und dass die Wälzlagereinsätze (20) von der Stirnseite her in entsprechende Ausnehmungen (30) des Schlittens (2) beidseitig der Führungsschiene (1) einschiebbar und dort lagerrichtig fixierbar ausgebildet sind.

## Claims

1. A bearing arrangement for the rectilinear guiding of a carriage (2) along a guide rail (1), having four endless rows of balls (3) disposed between the guide rail and the carriage, wherein the guide rail has four parallel ball races (4) which are associated with the supporting balls of the rows of balls and each of which is disposed in the transitional zone between two adjacent superimposed members (5, 6) of the substantially double T or cruciform guide rail, ball races (22) for the supporting balls and deflecting and return tracks (25) for the released balls being disposed on both sides of the guide rail inside the carriage, which engages around the guide rail on at least three sides, characterised in that on at least one side the guide rail (1) bears two moulded-on, longitudinally extending parallel webs (8), by which a longitudinal groove (9) is bounded, the guide rail (1) being placed by its longitudinal groove (9) with a narrow tolerance on a web (11) projecting on a supporting member (12, 13) and connected via the attaching means (14) to the supporting member.

2. A bearing arrangement according to claim 1, characterised in that the guide rail (1) has on the side opposite the first longitudinal groove (9) a second longitudinal groove (9) bounded by webs (8).

3. A bearing arrangement according to claim 2, characterised in that the attaching means (110) are disposed sunk in the bottom (10) of the second longitudinal groove (9), and a cover strip (17) is inserted in the longitudinal groove (9).

4. A bearing arrangement according to claim 3, characterised in that the cover strip (17) is positively clamped via retaining members (17a) to the guide rail (1).

5. A bearing arrangement according to claims 3 or 4, characterised in that the cover strip (17) is made of a flexible plastics material.

6. A bearing arrangement according to one of claims 2–4, characterised in that a positioning scale is inserted in the second longitudinal groove (9).

7. A bearing arrangement according to one of claims 2–5, characterised in that a rack is inserted in the second longitudinal groove (9).

8. A bearing arrangement according to claim 1, characterised in that the supporting member is a sectional rail (12) of substantially T-shaped cross-section which is arranged on a bearing surface for securing purposes.

9. A bearing arrangement according to one of the preceding claims, characterised in that the members (5, 6) of the guide rail are bounded by parallel flanks.

10. A bearing arrangement according to claim 9, characterised in that the guide rail (1) is substantially square in cross-section.

11. A bearing arrangement according to one of the preceding claims, characterised in that the four ball races (4) are disposed on the guide rail (1) point-symmetrically in relation to the longitudinal central axis of the guide rail (1).

12. A bearing arrangement according to one of the preceding claims, characterised in that the carriage (2) of C-shaped cross-section has an introduction opening (34) whose clear width is larger than the width of the guide rail (1); the carriage side ball races (22) and the deflecting and return tracks for the balls are combined in pairs in anti-friction inserts (20) which form structural units and in which the balls (3) of the two rows of balls are retained captive; and the anti-friction bearing inserts (20) can be inserted on both sides of the guide rail (1) from the end face into matching recesses (30) in the carriage (2) and are constructed to be fixed in the correct position at that place.

## Revendications

1. Dispositif de palier pour le guidage rectiligne d'un chariot (2) le long d'un rail approprié (1), avec quatre rangées sans fin de billes (3) entre lesdits rail et chariot, dans lequel le rail de guidage présente quatre chemins de roulement parallèles (4) affectés aux billes portantes des rangées et placés chaque fois dans la zone de transition entre deux branches (5, 6) voisines et perpendiculaires entre elles du rail de guidage, celui-ci en forme approximative de double T ou croisée, tandis que, à l'intérieur du chariot, entourant le rail du guidage sur au moins trois côtés, se trouvent des chemins de roulement (22) pour les billes portantes de part et d'autre dudit rail, ainsi que des chemins de renvoi et de retour (25) pour les billes déchargées, caractérisé par le fait que le rail de guidage (1) porte, formées avec lui, sur au moins un côté deux barrettes parallèles (8) de direction longitudinale qui délimitent une rainure longitudinale (9) et que ledit rail de guidage (1) avec sa rainure longitudinale (9) repose par cette dernière sous d'étroites tolérances sur une autre barrette (11) en saillie sur une partie de support (12, 13) et est relié à cette dernière au moyen de dispositifs de fixation (7).

2. Dispositif de palier selon la revendication 1 caractérisé par le fait que, du côté opposé à la première rainure longitudinale (9), le rail de guidage (1) en présente une autre limitée par des barrettes (8).

3. Dispositif de palier selon la revendication 2 caractérisé par le fait que les dispositifs de fixation (110) sont placés noyés dans le fond (10) de la seconde rainure longitudinale (9) et une bande de recouvrement (17) est insérée dans ladite rainure longitudinale (9).

4. Dispositif de palier selon la revendication 3 caractérisé par le fait que la bande recouvrement (17) est cramponné en interpénétration au rail de guidage (1) par des éléments de maintien (17a).

5. Dispositif de palier selon la revendication 3 ou 4 caractérisé par le fait que la bande de recouvrement (17) est constituée par un matériau plastique flexible.

6. Dispositif de palier selon les revendications de palier selon l'une des revendications 2 à 4 caractérisé par le fait qu'une échelle de positionnement est insérée dans la seconde rainure longitudinale (9).

7. Dispositif de palier selon l'une des revendications 2 à 5 caractérisé par le fait qu'une crémaillère est insérée dans la seconde rainure longitudinale (9).

8. Dispositif de palier selon la revendication 1 caractérisé par le fait que la partie de support est une barre profilée (12) à section essentiellement en forme de T qui est organisée pour se fixer sur une surface d'assise.

9. Dispositif de palier selon l'une des revendications précédentes caractérisé par le fait que les branches (5, 6) du rail de guidage sont limitées en parallélisme de leur plan.

10. Dispositif de palier selon la revendication 9 caractérisé par le fait que le rail de guidage (1) a une section essentiellement carrée.

11. Dispositif de palier selon l'une des revendications précédentes caractérisé par le fait que les quatre chemins de roulement (4) sont disposés sur le rail de guidage (1) en symétrie ponctuelle par rapport à l'axe longitudinal central de celui-ci.

12. Dispositif de palier selon l'une des revendications précédentes caractérisé par le fait que le chariot (2) à section en forme de C comporte une ouverture d'introduction (34) dont la largeur minimale est supérieure à la largeur du rail de guidage (1), que les chemins de roulement (22) côté chariot et les chemins de renvoi et de retour des billes sont assemblés chaque fois par paire dans des garnitures de palier de roulement (20) formant des unités de construction dans lesquelles les billes des deux rangées sont maintenus imperdables et que lesdites garnitures de palier de roulement (20) sont insérables de la face frontale dans des évidements correspondants (30) du chariot (2) de part et d'autre du rail de guidage (1) et y sont fixables en position voulue.

Fig. 1

Fig. 2

*Fig. 3*